# EUROPEAN PATENT SPECIFICATION

(11) **EP 4 424 504 B1**
(45) Date of publication and mention of the grant of the patent: **30.07.2025**
(21) Application number: 24161246.4
(22) Date of filing: 04.03.2024
(51) Int. Cl.: B32B 5/26, B32B 7/12, B32B 9/02, B32B 9/04

(54) **LAMINATE COMPOSITE WITH REINFORCED SANDWICH CORE**
LAMINATVERBUND MIT VERSTÄRKTEM SANDWICHKERN
COMPOSITE STRATIFIÉ AVEC NOYAU SANDWICH RENFORCÉ

(30) Priority: 02.03.2023 PT 2023118541
(43) Date of publication of application: 04.09.2024
(73) Proprietor: António Cameira Eiras, Unipessoal Lda, 1250-247 Lisboa (PT)
(72) Inventor: CAMEIRA EIRAS, ANTÓNIO, 1250-247 LISBOA (PT)
(74) Representative: Pereira da Cruz, Joao

(56) References cited:
- EP-A1- 3 228 447
- IT-A1- 201800 003 167

## Description

### FIELD OF THE INVENTION

The present invention is enclosed in the area of laminated composite materials for the, in particular to reinforced sandwich-structured composites and their manufacturing process.

### PRIOR ART

Composite materials are man-made structures that have been widely used by mankind, dating back to the use of straw in the manufacture of bricks in ancient Egypt.

During the second half of the last century, composite materials were developed using natural or synthetic fibers immersed in a polymer matrix. Sandwich-structured composites were devised to obtain a moderate robust material with high strength and light weight, which is an ideal solution for most engineering applications. Such structure is obtained by combining rigid materials, as external laminates, with a core material with high flexural strength which is also light and soft in nature, despite having lower mechanical performance to compression and traction forces.

Although the use of a single core layer in traditional sandwich-structured composites reduces the overall weight of the composite material while relying on the external rigid laminates to provide the desired overall mechanical properties to said composite material, when the composite is subjected to forces and moments with flexural, traction and compression efforts, with the consequent development of shear and axial stresses, the lower mechanical and structural resistance of the material used in the core may result in the core material detachment from the external laminates, which ultimately leads to irreversible structural damage of the composite. EP 3 228 447 A1 aims to provide a lightweight laminated composite while maintaining its mechanical properties.

The proposed invention innovatively provides a solution for such problem.

### SUMMARY OF THE INVENTION

It is an object of the present invention a laminated composite (1) comprising a first fiber laminate (2), a sandwich-like core (3) and a second fiber laminate (4) wherein the sandwich-like core (3) is stacked between the first fiber laminate (2) and the second fiber laminate (4). The sandwich-like core (3) further comprises at least two layers of cork material (5) and at least one intermediate fiber laminate (6), said intermediate fiber laminate (6) being intercalated between the two layers of cork material (5); wherein the first fiber laminate (2), the second fiber laminate (4) and the intermediate fiber laminate (6) comprise a plurality of stacked fiber layers (7) and wherein the first fiber laminate (2), the second fiber laminate (4), the intermediate fiber laminate (6) and the layers of cork material (5) are bonded to each other by a bonding polymer.

The use of a sandwich-like core (3) confers an increased resistance to deformation and rupture to the laminated composite (1), wherein the harder and rigid intermediate laminate (6) being intercalated between two layers of cork material (5), which are naturally softer, lighter and less dense, act as a backbone support structure to said core layers of cork material (5) while maintaining the mechanical, thermal insulation and acoustic damping properties that characterize sandwich composite materials.

In another embodiment of the present invention, the sandwich-like core (3) comprises a number of layers of cork material (5) superior to the number of intermediate fiber laminates (6) by one, thereby ensuring that the sandwich-like core (3) is reinforced by the insertion of one intermediate fiber laminate (6) between every two layers of cork material (5) comprised in the sandwich-like core (3). The alternation between layers of cork material (3) and intermediate fiber laminates (6) in the sandwich-like core (3) allows the increase of the overall mechanical performance of the laminate composite (1), wherein it is possible to increase the resistance to traction, compression and bending efforts by increasing the number of fiber laminates (6) in the sandwich-like core (3) of the laminate composite (1). The increase of intermediate fiber laminates (6) is followed by the increase of layers of cork material (5) so that that the thermal insulation and acoustic damping properties are maintained while the mechanical performance of the laminate composite (1) is increased and also to minimize the increase of the overall density of said laminate composite (1) resulting from the addition of intermediate fiber laminates (6) to the sandwich-like core (3).

In addition to the varying number of layers of cork material (5) of the sandwich-like core (3), the thickness of each layer of cork material (5) is variable, between 2 and 5 mm, so that the thermal insulation and acoustic damping properties of the laminate composite (1) are improved with increasing thickness of the layers of cork material. In addition to the tuning of the thermal insulation and acoustic damping properties, the varying thickness of the layers of cork material (5) also allows the tuning of mechanical properties of the laminate composite (1), in particular the resistance to traction, compression and bending efforts, in combination with the reinforcement of the sandwich-like core (3) by the insertion of intermediate fiber laminates (6).

The laminate composite (1) can be assembled in several configurations and is not limited to any of its described embodiments.

### DESCRIPTION OF THE FIGURES

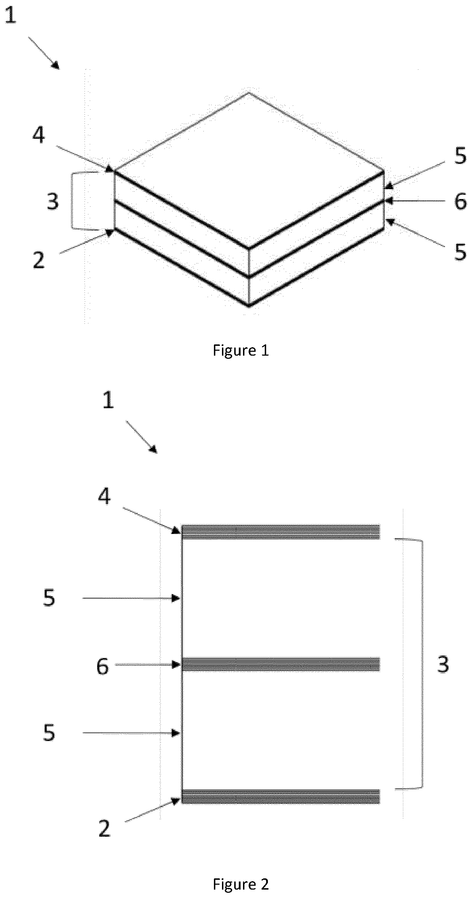

Figure 1 illustrates a perspective view of a preferred embodiment of the laminate composite (1) comprising a first fiber laminate (2), a sandwich-like core (3) and a second fiber laminate (4), wherein the sandwich-like core (3) is stacked between the first (2) and second fiber laminates (4), wherein said sandwich-like core (3) is comprised of one intermediate fiber laminate (6) stacked between two layers of cork material (5).
Figure 2 illustrates a cross section view of the laminate composite (1).

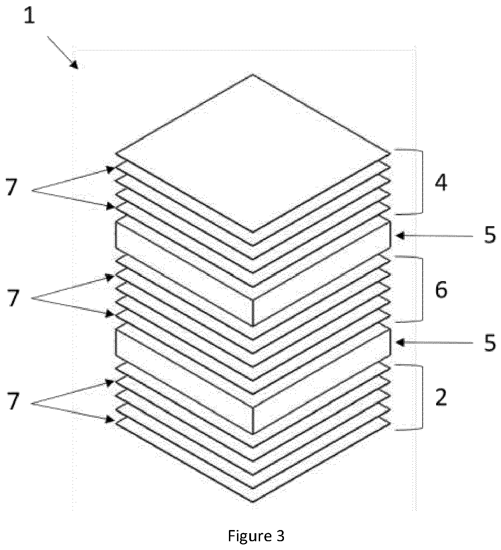

Figure 3 illustrates an exploded view of the laminate composite (1), wherein the first fiber laminate (2), the intermediate fiber laminate (6) and the second fiber laminate (4) are each comprised of five fiber layers (7), which are stacked on top of each other to form a cohesive fiber laminate (2)(4)(6).

### DETAILED DESCRIPTION

The more general and advantageous configurations of the present invention are described in the Summary of the Invention. Such configurations are detailed below in accordance with other advantageous and/or preferred embodiments of implementation of the present invention.

In a preferred aspect of the present invention, the distinct layered components of the laminate composite (1), namely the fiber laminates (2)(4)(6) and the layers of cork material (5) are bonded to each other by a bonding polymer, wherein said bonding polymer may comprise a thermoplastic polymer, such as polyamide resin, or said bonding polymer may comprise a thermosetting polymer, such as polyester, epoxy resin or vinyl ester resin. In addition to promoting the permanent and stable adhesion of the different stacked layers comprised in the laminate composite (1), the bonding polymer also confers an increased mechanical and structural resistance to rupture and deformation of the laminate composite (1) after said bonding polymer is fully cured and hardened.

In another relevant aspect, each layer of cork material (5) comprised in the sandwich-like core (3) comprises at least one material selected from the group consisting of: natural cork, agglomerated cork, and expanded cork. The type of cork material used in the sandwich-like core (3) affects the overall mechanical properties of the laminate composite, such as density, flexibility and resistance to traction and to compression, which allows further tuning of the mechanical properties of the laminate composite, depending on the desired application of said composite. Moreover, the porosity of the cork material used in the sandwich-like core (3) improves the impregnation of the bonding polymer during the manufacture of the laminate composite (1), which also impacts the overall mechanical performance of the final product.

In addition to the previous features, each fiber layer (7) of the first fiber laminate (2), the second fiber laminate (4) or in the intermediate fiber laminate (6) comprises least one fiber material selected from the group consisting of: natural fibers, synthetic fibers, fiberglass, aramid fibers, boron fibers and carbon fibers. In a preferred embodiment of the present invention, the fiber materials comprised in each fiber layer (7) are natural fibers, such as linen, bamboo or other fibers of biological source, to minimize the ecological footprint and to promote a sustainable product development.

It is also an object of the present invention a process for manufacturing a laminated composite (1), comprising the following steps:
- application of a first absorbable film, such as felt, on a working surface or mold, so that any excess bonding polymer can be absorbed;
- application of a first peel-ply film, such as nylon or polyester, on top of the first absorbable film;
- stacking the fiber layers (7) on top of the peel-ply film, wherein the bonding polymer is applied at every two stacked fiber layers, thereby forming a first fiber laminate (2);
- application of the first layer of cork material (5) of the sandwich-like core (3), wherein the bonding polymer is applied to the first layer of cork material (5) so that said first layer of cork material (5) is partially of fully impregnated with the bonding polymer;
- application of the fiber layers (7) on top of the first layer of cork material, wherein the bonding polymer is applied between every two stacked fiber layers, thereby forming an intermediate fiber laminate (6);
- application of the second layer of cork material (5) of the sandwich-like core (3), wherein the bonding polymer is applied to the second layer of cork material (5) so that said second layer of cork material (5) is partially of fully impregnated with the bonding polymer;
- application of the fiber layers (7) on top of the second layer of cork material (5), wherein the bonding polymer is applied between every two fiber layers, thereby forming a second fiber laminate (4);
- application of a second peel-ply film on top of the second fiber laminate (4);
- application of a second absorbable film on top of the second peel-ply film, thereby obtaining a stratified body;
- application of a constant load on top of the stratified composite body or application of constant vacuum, using a vacuum container, so that any inner pockets of air are removed from the stratified body;
- curing of the bonding polymer followed by the removal of the first and second peel-ply films and of the first and second absorbable layer, thereby obtaining a laminated composite (1).

In a relevant aspect of the manufacturing process, additional layers of cork material (5) may be added to the sandwich-like core (3), being intercalated with additional intermediate fiber laminates (6), so that the total number of layers of cork material (5) is superior to the number of intermediate fiber laminates (6) by one layer wherein the addition of more layers of cork material (5) and intermediate fiber laminates (6) in the sandwich-like core (3) allows the tuning of the overall mechanical performance of the laminate composite (1), while minimizing the increase of the overall density of said laminate composite (1) resulting from the addition of intermediate fiber laminates (6) to the sandwich-like core (3).

The manufacturing process of the laminate composite may be adapted to be applicable in the automobile and aerospace industries, and naval engineering, so as to produce molded components comprising a reinforced laminate composites as described above. The use of the laminate composite (1) may be also applicable in building construction and in the manufacturing of refrigerating equipment comprising laminate composites.

Of course, the preferred embodiments shown above are combinable, in different possible configurations, being the present invention not limited to the embodiments previously described.

## Claims

1. A laminated composite (1) comprising a first fiber laminate (2), a sandwich-like core (3) and a second fiber laminate (4) wherein the sandwich-like core (3) is stacked between the first fiber laminate (2) and the second fiber laminate (4), **characterized by** the sandwich-like core (3) comprising at least two layers of cork material (5) and at least one intermediate fiber laminate (6), each intermediate fiber laminate (6) being intercalated between two layers of cork material (5); wherein each of the first fiber laminate (2), the second fiber laminate (4) and the intermediate fiber laminate (6) comprise a plurality of stacked fiber layers (7); and wherein the first fiber laminate (2), the second fiber laminate (4), the intermediate fiber laminate (6) and the layers of cork material (5) are bonded to each other by a bonding polymer.

2. A laminated composite according (1) to any of the previous claims wherein thickness of each layer of cork material (5) is between 2 and 5 mm.

3. A laminated composite (1) according to any of the previous claims wherein the bonding polymer comprises, optionally, a thermosetting polymer.

4. A laminated composite (1) according to any of the previous claims wherein the bonding polymer comprises, optionally, a thermoplastic polymer.

5. A laminated composite (1) according to any of the previous claims wherein each layer of cork material (5) comprises at least one material selected from the group consisting of: natural cork, agglomerated cork, and expanded cork.

6. A laminated composite (1) according to any of the previous claims wherein the fiber layers (7) of each of the first fiber laminate (2), the second fiber laminate (4) and intermediate fiber laminate (6) comprise at least one fiber material selected from the group consisting of: natural fibers, synthetic fibers, fiberglass, aramid fibers, boron fibers and carbon fibers.

7. A process for manufacturing the laminated composite (1) of any of the preceding claims **characterized by** comprising the following steps:
- provide a plurality of fiber layers (7) on top of a working surface or mold, thereby forming a first fiber laminate (2);
- provide a first layer of cork material (5) on top of the first fiber laminate (2);
- provide a plurality of fiber layers (7) on top of the first layer of cork material (5), thereby forming an intermediate fiber laminate (6);
- provide a second layer of cork material (5) on top of the intermediate fiber laminate (6);
- provide a plurality of fiber layers (7) on top of the second layer of cork material (5), thereby forming a second fiber laminate (4);
- apply a bonding polymer to the stacked fiber layers (7) of the first fiber laminate (2), each intermediate fiber laminate (6) and of the second fiber laminate (4), and to each stacked layer of cork material (5), thereby forming a stratified composite body;
- apply a constant load on top of the stratified composite body;
- cure and hardening of the bonding polymer, thereby obtaining a laminated composite (1).

8. A process according to the previous claim wherein additional layers of cork material (5) are intercalated with additional intermediate fiber laminates (6), wherein the total number of layers of cork material (5) is superior to the number of intermediate fiber laminates (6) by one layer.

9. A process according to any of the claims 7 - 8 wherein a first absorbable film and a first peel-ply film is applied to a working surface or mold prior to the application of the fiber layers (7) of the first fiber laminate (2).

10. A process according to claim 9 wherein a second peel-ply film and a second absorbable film is applied on top of the second fiber laminate (4).

11. A process according to the claims 9 - 10 wherein the first and second absorbable layer comprises felt.

12. A process according to the claims 9 - 10 wherein the first and second peel-ply layer comprises at least one material selected from the group consisting of: nylon and polyester.

## Patentansprüche

1. Laminierter Verbundwerkstoff (1), der ein erstes Faserlaminat (2), einen sandwichartigen Kern (3) und ein zweites Faserlaminat (4) umfasst, wobei der sandwichartige Kern (3) zwischen dem ersten Faserlaminat (2) und dem zweiten Faserlaminat (4) gestapelt ist, **dadurch gekennzeichnet, dass** der sandwichartige Kern (3) mindestens zwei Schichten aus Korkmaterial (5) und mindestens ein Zwischenfaserlaminat (6) umfasst, wobei jedes Zwischenfaserlaminat (6) zwischen zwei Schichten aus Korkmaterial (5) eingefügt ist; wobei das erste Faserlaminat (2), das zweite Faserlaminat (4) und das Zwischenfaserlaminat (6) jeweils eine Vielzahl von gestapelten Faserschichten (7) umfassen; und wobei das erste Faserlaminat (2), das zweite Faserlaminat (4), das Zwischenfaserlaminat (6) und die Schichten aus Korkmaterial (5) durch ein Bindepolymer miteinander verbunden sind.

2. Laminierter Verbundwerkstoff (1) nach einem der vorhergehenden Ansprüche, wobei die Dicke jeder Schicht aus Korkmaterial (5) zwischen 2 und 5 mm beträgt.

3. Laminierter Verbundwerkstoff (1) nach einem der vorhergehenden Ansprüche, wobei das Bindepolymer gegebenenfalls ein wärmehärtendes Polymer umfasst.

4. Laminierter Verbundwerkstoff (1) nach einem der vorhergehenden Ansprüche, wobei das Bindepolymer gegebenenfalls ein thermoplastisches Polymer umfasst.

5. Laminierter Verbundwerkstoff (1) nach einem der vorhergehenden Ansprüche, wobei jede Schicht aus Korkmaterial (5) mindestens ein Material umfasst, das aus der Gruppe ausgewählt ist, die aus Naturkork, agglomeriertem Kork und expandiertem Kork besteht.

6. Laminierter Verbundwerkstoff (1) nach einem der vorhergehenden Ansprüche, wobei die Faserschichten (7) jedes des ersten Faserlaminats (2), des zweiten Faserlaminats (4) und des Zwischenfaserlaminats (6) mindestens ein Fasermaterial umfassen, das aus der Gruppe ausgewählt ist, die aus Naturfasern, synthetischen Fasern, Glasfasern, Aramidfasern, Borfasern und Kohlenstofffasern besteht.

7. Verfahren zur Herstellung des laminierten Verbundwerkstoffs (1) nach einem der vorhergehenden Ansprüche, **dadurch gekennzeichnet, dass** es die folgenden Schritte umfasst:
- Bereitstellen eine Vielzahl von Faserschichten (7) auf einer Arbeitsfläche oder Form, wodurch ein erstes Faserlaminat (2) gebildet wird;
- Bereitstellen einer ersten Schicht aus Korkmaterial (5) auf dem ersten Faserlaminat (2);
- Bereitstellen eine Vielzahl von Faserschichten (7) auf der ersten Schicht aus Korkmaterial (5), wodurch ein Zwischenfaserlaminat (6) gebildet wird;
- Bereitstellen eine zweite Schicht aus Korkmaterial (5) auf dem Zwischenfaserlaminat (6);
- Bereitstellen eine Vielzahl von Faserschichten (7) auf der zweiten Schicht aus Korkmaterial (5), wodurch ein zweites Faserlaminat (4) gebildet wird;
- Aufbringen eines Bindepolymers auf die gestapelten Faserschichten (7) des ersten Faserlaminats (2), jedes Zwischenfaserlaminats (6) und des zweiten Faserlaminats (4) sowie auf jede gestapelte Schicht aus Korkmaterial (5), wodurch ein geschichteter Verbundwerkstoffkörper gebildet wird;
- Aufbringen eine konstante Last auf die Oberseite des geschichteten Verbundwerkstoffkörpers;
- Aushärtung des verbindenden Polymers, wodurch ein laminierter Verbundwerkstoff (1) entsteht.

8. Verfahren nach dem vorhergehenden Anspruch, wobei zusätzliche Schichten aus Korkmaterial (5) mit zusätzlichen Zwischenfaserlaminaten (6) interkaliert werden, wobei die Gesamtzahl der Schichten aus Korkmaterial (5) die Anzahl der Zwischenfaserlaminate (6) um eine Schicht übersteigt.

9. Verfahren nach einem der Ansprüche 7-8, wobei vor dem Aufbringen der Faserschichten (7) des ersten Faserlaminats (2) eine erste absorbierbare Folie und eine erste Abziehfolie auf eine Arbeitsfläche oder Form aufgebracht wird.

10. Verfahren nach Anspruch 9, wobei eine zweite Abziehfolie und eine zweite absorbierbare Folie auf das zweite Faserlaminat (4) aufgebracht werden.

11. Verfahren nach einem der Ansprüche 9-10, wobei die erste und zweite absorbierbare Schicht aus Filz besteht.

12. Verfahren nach einem der Ansprüche 9-10, wobei die erste und die zweite Abziehschicht mindestens ein Material umfassen, das aus der Gruppe ausgewählt ist, die aus Nylon und Polyester besteht.

## Revendications

1. Composite stratifié (1) comprenant un premier stratifié de fibres (2), un noyau en sandwich (3) et un deuxième stratifié de fibres (4) dans lequel le noyau en sandwich (3) est empilé entre le premier stratifié de fibres (2) et le deuxième stratifié de fibres (4), **caractérisé en ce que** le noyau en sandwich (3) comprend au moins deux couches de liège (5) et au moins un stratifié de fibres intermédiaire (6), chaque stratifié de fibres intermédiaire (6) étant intercalé entre deux couches de liège (5) ; dans lequel le premier stratifié de fibres (2), le deuxième stratifié de fibres (4) et le stratifié de fibres intermédiaire (6) comprennent chacun une pluralité de couches de fibres (7) empilées ; et dans lequel le premier stratifié de fibres (2), le deuxième stratifié de fibres (4), le stratifié de fibres intermédiaire (6) et les couches de liège (5) sont liés l'un à l'autre par un polymère de liaison.

2. Composite stratifié (1) selon l'une des revendications précédentes, dans lequel l'épaisseur de chaque couche de liège (5) est comprise entre 2 et 5 mm.

3. Composite stratifié (1) selon l'une quelconque des revendications précédentes, dans lequel le polymère de liaison comprend, optionnellement, un polymère thermodurcissable.

4. Composite stratifié (1) selon l'une quelconque des revendications précédentes, dans lequel le polymère de liaison comprend, optionnellement, un polymère thermoplastique.

5. Composite stratifié (1) selon l'une quelconque des revendications précédentes, dans lequel chaque couche de liège (5) comprend au moins un matériau choisi dans le groupe constitué par : le liège naturel, le liège aggloméré et le liège expansé.

6. Composite stratifié (1) selon l'une quelconque des revendications précédentes, dans lequel les couches de fibres (7) du premier stratifié de fibres (2), du deuxième stratifié de fibres (4) et du stratifié de fibres intermédiaire (6) comprennent chacune au moins un matériau fibreux choisi dans le groupe constitué par : les fibres naturelles, les fibres synthétiques, la fibre de verre, les fibres aramides, les fibres de bore et les fibres de carbone.

7. Procédé de fabrication du composite stratifié (1) de l'une quelconque des revendications précédentes, **caractérisé en ce qu'**il comprend les étapes suivantes :
- déposer une pluralité de couches de fibres (7) sur une surface de travail ou un moule, formant ainsi un premier stratifié de fibres (2) ;
- déposer une première couche de liège (5) sur le premier stratifié de fibres (2) ;
- déposer une pluralité de couches de fibres (7) sur la première couche de liège (5), formant ainsi un stratifié de fibres intermédiaire (6) ;
- déposer une deuxième couche de liège (5) sur le stratifié de fibres intermédiaire (6) ;
- déposer une pluralité de couches de fibres (7) sur la deuxième couche de liège (5), formant ainsi un deuxième stratifié de fibres (4) ;
- appliquer un polymère de liaison aux couches de fibres (7) empilées du premier stratifié de fibres (2), de chaque stratifié de fibres intermédiaire (6) et du deuxième stratifié de fibres (4), et à chaque couche empilée de liège (5), formant ainsi un corps composite stratifié ;
- appliquer une charge constante sur le corps composite stratifié ;
- cure et durcissement du polymère de liaison, ce qui permet d'obtenir un composite stratifié (1).

8. Procédé selon la revendication précédente, dans lequel des couches supplémentaires de liège (5) sont intercalées avec des stratifiés de fibres intermédiaires (6) supplémentaires, le nombre total de couches de liège (5) étant supérieur d'une couche au nombre de stratifiés de fibres intermédiaires (6).

9. Procédé selon l'une quelconque des revendications 7 à 8, dans lequel un premier film absorbable et un premier film pelable sont appliqués sur une surface de travail ou un moule avant l'application des couches de fibres (7) du premier stratifié de fibres (2).

10. Procédé selon la revendication 9, dans lequel un deuxième film pelable et un deuxième film absorbable sont appliqués sur le deuxième stratifié de fibres (4).

11. Procédé selon les revendications 9 à 10, dans lequel la première et la deuxième couche absorbable comprennent du feutre.

12. Procédé selon les revendications 9 à 10, dans lequel la première et la deuxième couche pelable comprennent au moins un matériau choisi dans le groupe constitué par le nylon et le polyester.
